# EUROPÄISCHE PATENTANMELDUNG

(11) **EP 0 659 867 A2**
(43) Veröffentlichungstag der Anmeldung: **28.06.1995**
(21) Anmeldenummer: 94120313.5
(22) Anmeldetag: 21.12.1994
(51) Int. Cl.: C10G 1/10

(54) **Verfahren und Vorrichtung zur thermischen Depolymerisation von Kunststoffen**

(30) Priorität: 23.12.1993 DE 4344311
(71) Anmelder: Linde Aktiengesellschaft, D-65189 Wiesbaden (DE)
(72) Erfinder: Fritz, Peter M., Dr. rer. nat., D-82008 Unterhaching (DE); Häussinger, Peter, Dr. rer. nat., D-81375 München (DE)
(74) Vertreter: Kasseckert, Rainer

(57) **Zusammenfassung**

Die Erfindung betrifft ein Verfahren und eine Vorrichtung zur thermischen Depolymerisation von Kunststoffen, insbesondere von Kunststoffen in Form von sortierten oder unsortierten Polymerabfällen aus der industriellen Produktion oder aus dem Hausmüll. Derartige Kunststoffe werden aus ökologischen Gründen einer stofflichchemischen Wiederverwertung durch Zerlegung in niedermolekulare Fragmente zugeführt. Erfindungsgemäß wird der Polymereinsatz in einen Reaktionsraum gegeben und dort unter Wärmezufuhr depolymerisiert, wobei bei der thermischen Depolymerisation flüchtige Kohlenwasserstoffe und niedermolekulare Fragmente gewonnen werden, die aus dem Reaktionsraum gasförmig abgezogen werden, wobei im Reaktionsraum eine Umwälzung der aus den Kunststoffen erhaltenen Sumpfphase über einen Heizkreislauf mit Aufkocher erfolgt und wobei vom Sumpf des Reaktionsraumes ein flüssiger und gegebenenfalls teilweise fester Rückstand der thermischen Depolymerisation ausgeschleust wird. Diese flüchtigen Kohlenwasserstoffe und niedermolekulare Fragmente fallen zum überwiegenden Teil in Form von kürzerkettigen Oligomeren an. Die Kunststoffe können dabei zerkleinert oder als Granulat oder in Suspension erwärmt und aufgeschmolzen werden. Die Erwärmung und Aufschmelzung kann zumindestens teilweise in einem Vorbehandlungsbehälter durchgeführt werden. Vorteilhafterweise werden die zerkleinerten, granulierten oder suspendierten Polymere mit einem Teilstrom der Schmelze aus dem Reaktionsraum vermischt und in den Vorbehandlungsbehälter eingespeist. Die Depolymerisation im Reaktionsraum erfolgt bei einem Druck von 0,01 bis 20 bar absolut und bei einer Temperatur von 300 bis 900°C.

## Beschreibung

Die Erfindung betrifft ein Verfahren und eine dafür geeignete Vorrichtung zur thermischen Depolymerisation von Kunststoffen.

Der vielfältige und zahlreiche Einsatz von Kunststoffen führt zu großen Mengen sortierter oder unsortierter Polymerabfällen sowohl aus industrieller Produktion als auch aus Hausmüll. Die Deponierung von Kunststoffen ist im Hinblick auf den Umweltschutz problematisch. Sie wird zunehmend teurer und durch gesetzliche Bestimmungen eingeschränkt. Daher ist ein Recycling von Kunststoffen vorzuziehen. In Deutschland werden beispielsweise durch das DUALE SYSTEM DEUTSCHLAND (DSD) Kunststoff-Fraktionen gesammelt, die einer stofflich-chemischen Wiederverwertung zugeführt werden können.

Bislang sind als Verfahren zur stofflichen Wiederverwertung (Recycling) bekannt: Die Hydrierung der Kunststoff-Fraktionen zusammen mit einer anderweitig angefallenen Rückstandsfraktion unter sehr hohem Druck und bei hoher Temperatur, oder katalytische Verfahren, beispielsweise an Zeoliten. Die Nachteile dieser Verfahren sind z.B. bei der Hydrierung der notwendige hohe Verfahrensdruck und die hohe Verfahrenstemperatur. Diese Bedingungen bringen eine aufwendige und teure Ausführung der benötigten Anlage mit sich (Druckreaktor). Das Verfahren stellt hohe Anforderungen an die Werkstoffe und macht einen hohen Energieaufwand erforderlich. Außerdem ist teurer Wasserstoff zur Durchführung des Verfahrens notwendig. Durch den Energieeinsatz von einer Tonne Rohöl werden im Verfahren mit Hydrierung eine Wertstoff-Produktausbeute von etwa 1,1 t erzielt. Bei der katalytischen Hydrierung muß verbrauchter bzw. desaktivierter Katalysator ersetzt werden.

Neben diesen Nachteilen weisen die genannten Verfahren einen entscheidenden gemeinsamen Nachteil auf, nämlich daß die zu spaltenden Polymere vorfraktioniert, d.h. sortiert werden müssen: Stickstoff-, Sauerstoff- und Chlor-haltige Anteile müssen entfernt werden und können dem zu spaltenden Reaktionsmedium nur in einem bestimmten Anteil zugesetzt werden, der zwischen 5 und 50 Gew.-% liegt.

Der Erfindung liegt daher die Aufgabe zugrunde, ein Verfahren und eine Vorrichtung der eingangs genannten Art aufzuzeigen, durch welche ermöglicht wird, auf eine aufwendige und teure Vorbehandlung und/oder Vorfraktionierung der zu behandelnden Polymere zu verzichten. Gleichzeitig soll aber ein hoher Depolymerisierungsgrad erzielt werden, mit nur geringem Anteil der Gasfraktion (C₃₋ -Kohlenwasserstoffe), sowie eine möglichst vollständige Freisetzung der Heterobestandteile (z.B. Cl, N, O).

Diese Aufgabe wird für das erfindungsgemäße Verfahren dadurch gelöst, daß die Kunststoffe in einem Reaktionsraum unter Wärmezufuhr depolymerisiert werden, wobei bei der thermischen Depolymerisation flüchtige Kohlenwasserstoffe und niedermolekulare Fragmente gewonnen werden, die aus dem Reaktionsraum gasförmig abgezogen werden, wobei im Reaktionsraum eine Umwälzung der aus den Kunststoffen erhaltenen Sumpfphase über einen Heizkreislauf mit Aufkocher erfolgt und wobei vom Sumpf des Reaktionsraumes ein flüssiger und gegebenenfalls teilweise fester Rückstand der thermischen Depolymerisation ausgeschleust wird.

Unter Kunststoffen ist dabei ein Polymergemisch (Einsatz für die erfindungesgemäße Depolymerisation) zu verstehen mit einem Polymeranteil von 100 bis 10 %, gegebenenfalls in einer Flüssigkeit. Der Polymeranteil des Einsatzes kann im Hinblick auf die Effiziens des erfindungsgemäßen Verfahrens möglichst groß gewählt werden. Auf der anderen Seite wird er aber in der Praxis durch die Förderfähigkeit des Polymereinsatzes begrenzt. Als geeignet hat sich ein Polymeranteil des Einsatzes von 50 bis 90 % erwiesen, wobei ein Polymeranteil von 75 bis 85% besonders bevorzugt wird.

Um ein gute Förderfähigkeit des Polymergemisches in den Reaktionsraum zu erreichen, können erfindungsgemäß die Kunststoffe mechanisch vorbehandelt werden, wobei die Kunststoffe zerkleinert oder granuliert werden können. Zusätzlich kann die Förderfähigkeit verbessert werden, wenn die Polymere quasi als Maische, d.h. in Suspension, behandelt werden.

Im erfindungsgemäßen Verfahren wird die im wesentlichen aus Kohlenwasserstoffen bestehende Schmelze bzw. Suspension im Reaktionsraum aufgestaut. Das erfindungsgemäße Verfahren ermöglicht, daß Polymere beispielsweise aus Produktionsabfällen oder aus Fraktionen des Verpackungs- bzw. des Hausmülls zerkleinert, granuliert und/oder suspendiert durch Erwärmung, Aufschmelzen und Verweilen bei höheren Temperaturen in niedermolekulare Fragmente zerlegt werden.

Als Vorbehandlung genügt dabei eine Zerkleinerung bzw. Granulierung der Kunststoffe und/oder das Ansetzen als Suspension. Eine Vorfraktionierung bzw. Vorsortierung ist nicht zwingend erforderlich, da Stickstoff-, Sauerstoff- und/oder Chlor-haltige Anteile mit dem erfindungsgemäßen Verfahren verarbeitet werden können. Als weitere unterstützende Vorbehandlung kann eine grobe Vorreinigung durch Wasser vorgesehen sein.

Als Einsatz eignen sich im besonderen Maße die vom DSD abgegebenen Kunststoff-Fraktionen. Insbesondere können mit dem erfindungsgemäßen Verfahren beispielsweise folgende Kunststoffe thermisch depolymerisiert werden: Polyolefine wie Polyethylen oder Polypropylen, Polystyrol, Styrol/Butadien-Copolymerisate, Polyester, Polyamide, Polyurethane, Polyacryle, Phenolharze, ABS-Kunststoffe und/oder Celluloseacetate, sowie Mischungen dieser Kunststoffe. Mit dem erfindungsgemäßen Verfahren können auch PVC enthaltende Einsätze verarbeitet werden. Bevorzugt werden jedoch PVC-arme Einsätze depolymerisiert. Besonders geeignet ist die Anwendung des erfindungsgemäßen Verfahren auch auf synthetische, organische Stoffe.

Entscheidend beim erfindungsgemäßen Verfahren ist, daß die Produkte aus der Depolymerisation flüchtig (in der Gasphase) den Reaktionsraum verlassen. Das erfindungsgemäße Verfahren läuft als Reaktivdestillation ab. Die Depolymerisation wird so durchgeführt, daß der Anteil der C₃₋ - oder sogar der C₄₋ -Kohlenwasserstoffe im Produkt gering ausfällt. Die erfindungsgemäßen Reaktionsbedingungen werden dabei so gewählt, daß die bei der Depolymerisation aus den Polymeren entstehenden niedermolekularen Fragmente aufgrund ihrer Flüchtigkeit aus dem Reaktionsraum abgezogen werden, bevor sie weiter bis zu C₃₋ - bzw. C₄₋ -Kohlenwasserstoffe gespalten werden. Mit dem erfindungsgemäßen Verfahren kann eine Depolymerisation der im Einsatz enthaltenen Polymere in der Regel nahezu vollständig, zumindest aber zum überwiegenden Teil, bewirkt werden.

Mit Vorteil werden die bei der thermischen Depolymerisation gewonnenen flüchtigen Produkte quasi in statu nascendi gasförmig oben aus dem Reaktionsraum abgezogen. Damit wird eine weitere Aufspaltung in unerwünscht kurzkettige Verbindungen vermieden.

Der Reaktionsraum wird im erfindungsgemäßen Verfahren indirekt erwärmt, indem im Reaktionsraum eine Erwärmung der Sumpfphase über einen Heizkreislauf mit Aufkocher erfolgt. Mit Hilfe des Aufkochers kann vorteilhafterweise die Erwärmung bzw. das Aufschmelzen der Kunststoffe mit einer Vermischung durch eine Umwälzung der Sumpfphase kombiniert werden.

In Ausgestaltung des erfindungsgemäßen Verfahrens kann die Erwärmung und Aufschmelzung zumindestens teilweise in einem Vorbehandlungsbehälter durchgeführt werden. Der Vorbehandlungsbehälter kann dazu direkt oder indirekt beheizt werden.

Darüber hinaus kann die Sumpfphase aber auch für den Transport der zerkleinerten, granulierten oder suspendierten Kunststoffe eingesetzt werden. Dazu werden die zerkleinerten, granulierten und/oder suspendierten Kunststoffe mit einem Teilstrom der Sumpfphase aus dem Reaktionsraum vermischt in den Reaktionsraum bzw. in einen Vorbehandlungsbehälter eingespeist. Durch die Vermischung von Kunststoffen und dem Teilstrom der Sumpfphase wird erreicht, daß die Kunststoffe dosiert in den Reaktionsraum bzw. den Vorbehandlungsbehälter gefördert werden können. Durch die Vermischung mit dem heißen Teilstrom der Sumpfphase aus dem Reaktionsraum werden die Kunststoffe außerdem erwärmt. Damit wird eine direkte Beheizung des Vorbehandlungsbehälters erreicht. Im Vorbehandlungsbehälter findet eine Aufschmelzung und ggf. eine Vormischung mit dem Reaktionsmedium oder einem Hilfsmedium statt. Das Hilfsmedium kann ebenso zur Förderung der Kunststoffe in den Reaktionsraum bzw. den Vorbehandlungsbehälter, vorzugsweise in erwärmtem Zustand, dienen. Als Hilfsmedium können einerseits Kohlenwasserstoffe, wie hochsiedende Kohlenwasserstofffraktionen, beispielsweise Thermoöl, aber auch schwere Rückstände, wie Vakuumgasöl, sowie auch Lösungsmittel benutzt werden. Auf diese Art lassen sich mit dem erfindungsgemäßen Verfahren neben den Kunststoffen zusätzlich auch anderweitig schwer verwertbare, in der Regel hochsiedende Kohlenwasserstoffe enthaltende Rückstände aufarbeiten.

Zur besseren Vermischung kann im Vorbehandlungsbehälter und/oder im Reaktionsraum eine Rührvorrichtung wie beispielsweise ein Rührwerk installiert sein. Der Kunststoffeinsatz wird im Vorbehandlungsbehälter durch die Aufschmelzung pumpbar und kann in den Reaktionsraum transportiert werden, wobei dazu insbesondere Kolben- oder Exzenterpumpen geeignet sind.

Mit Vorteil arbeitet das erfindungsgemäße Verfahren im Reaktionsraum mit einem Druck von 0,01 bis 20 bar absolut, vorzugsweise 0,1 bis 5 bar absolut. Besonders bevorzugt wird ein Druck im Reaktionsraum zwischen 1 und 2 bar absolut. Für die Depolymerisation im Reaktionsraum wird eine Temperatur von 300 bis 900°C, vorzugsweise von 350 bis 600°C, besonders bevorzugt von 400 bis 550°C, gewählt. Die Produktverteilung kann beispielsweise durch Änderung von Verweilzeit, Druck und Temperatur gesteuert werden. Es hat sich gezeigt, daß die Kunststoffe besonders gut bei einer Verweilzeit von 0,1 bis 3 h, vorzugsweise von 0,5 bis 2 h, im Reaktionsraum depolymerisiert werden. Die genannte Verweilzeit ist dabei als eine mittlere Verweilzeit des Einsatzgemisches bis zum Abzug als Produkt aus dem Reaktionsbehälter zu betrachten.

Die Vorteile des erfindungsgemäßen Verfahrens gegenüber dem Stand der Technik liegen auf der Hand. Die thermische Depolymerisation im Reaktionsraum findet bei relativ niedrigem Druck statt, so daß keine besonders hohen Anforderungen an die verwendeten Werkstoffe gestellt werden müssen.Mit der Erfindung steht ein im wesentlichen autothermes Verfahren zur Verfügung. Für das erfindungsgemäße Verfahren ist darüber hinaus kein teurer Hydrierwasserstoff erforderlich.

In Ausgestaltung der Erfindung wird in den Reaktionsraum ein Strippgas eingespeist. Das Strippgas bewirkt eine Durchmischung der Sumpfphase im Reaktionsraum. Vor allem aber werden durch das Strippgas die bei der Depolymerisation gebildeten niedermolekularen Fragmente, Wasser und/oder HCl, NH₃, etc. ausgestrippt. Als Strippgase eignen sich Wasserdampf, ein Inertgas (z.B. N₂, He, Ar), H₂ oder Mischungen der genannten Gase.

In Weiterbildung der Erfindung werden die aus dem Reaktionsraum aufsteigenden gasförmigen Produkte einer Fraktionierung unterzogen, vorzugsweise in einem auf dem Reaktionsraum aufgesetzten Fraktionierraum. Reaktionsraum und Fraktionierraum können aber auch baulich getrennt angeordnet werden. In diesem Fall wird das Überkopfprodukt aus dem Reaktionsraum in die Fraktionierung gegeben.

Bevorzugt wird die Fraktionierung so ausgebildet, daß vom Kopf der Fraktionierung eine Gasfraktion aus im wesentlichen C₃₋ -Kohlenwasserstoffen abgezogen wird, die auch H₂ enthalten kann. Diese Gasfraktion kann zur Entfernung von H₂O und Begleitstoffen, wie HCl und/oder NH_{3,} einer Gaswäsche, vorzugsweise einer Wasserwäsche, zugeführt werden.

Weitere Vorteile ergeben sich im erfindungsgemäßen Verfahren, wenn ein Teilstrom der Gasfraktion vom Kopf der Fraktionierung oder des von der Gaswäsche abgezogenen Produktstromes als Strippgas in den Reaktionsraum eingespeist wird. Dabei kann der als Strippgas in den Reaktionsraum zurückgeführte Teilstrom der Gasfraktion mit den oben genannten Strippgasen vermischt werden.

Mit Vorteil werden bei der Fraktionierung neben der Gasfraktion eine Benzinfraktion, vorzugsweise aus C₄ - bis C₁₁ -Kohlenwasserstoffen, und eine Ölfraktion, vorzugsweise aus C₁₂₊ -Kohlenwasserstoffen, die bis etwa unterhalb 500°C sieden, gewonnen. Derartige Produktfraktionen können durch den Einbau von Kaminböden auf Höhe bestimmter Siedeschnitte im Fraktionierraum abgezogen werden. Aus den Produktfraktionen kann über Trennvorrichtungen Reaktionswasser abgetrennt werden, welches vorteilhaft in der Wasserwäsche für die Gasfraktion eingesetzt werden kann.

Der aus der dem Reaktionsraum abgezogene Produktstrom oder der oder die aus der Fraktionierung erhaltene(n) flüssige(n) Produktstrom/-ströme kann/können einer Hydrierung unterzogen werden. Diese Hydrierung kann im Unterschied zur einleitend beschriebenen Hochdruckhydrierung von Kunststoffen als Niederdruckhydrierung ausgeführt werden.

Bei der thermischen Zersetzung der Polymere gemäß dem erfindungsgemäßen Verfahren können sich im Reaktionsraum Rückstände bilden, welche sich im unteren Bereich des Reaktionsraumes ansammeln. Diese Rückstände können beispielsweise aus Kohlenstoff, Füllstoffen, Resten der Additive und mineralischen Anteilen bestehen. Die Rückstände sind größtenteils flüssig, können aber auch in fester Form anfallen. Dieser flüssige und ggf. teilweise feste Rückstand aus der thermischen Depolymerisation wird vom Sumpf des Reaktionsraumes aus einer beruhigten Zone ausgeschleust. Über eine dafür vorgesehene Ausbringung kann im Bedarfsfall auch der Reaktionsraum gereinigt werden.

Die erfindungsgemäße Vorrichtung zur thermischen Depolymerisation von Polymergemischen besteht aus einem Reaktor mit einer Zuleitung für den Polymereinsatz, einer Leitung vom Kopf des Reaktors für das gasförmige Produkt, einer Leitung für flüssige und/oder feste Rückstände und einem Aufkocher zur Umwälzung der Sumpfphase.

In Ausbildung der erfindungsgemäßen Vorrichtung führt eine Leitung vom Reaktor zu einer Mischvorrichtung für die zerkleinerten, granulierten oder suspendierten Kunststoffe und eine Leitung von der Mischvorrichtung zum Reaktor. Die Mischvorrichtung kann dabei auch die Funktion einer Dosiereinrichtung übernehmen. Geeignet dazu sind beispielsweise Förderschnecken, Zellradschleusen oder Extruder. Zusätzlich können in den Leitungen geeignete Fördermittel eingebaut sein.

Ferner kann in die Leitung von der Mischvorrichtung zum Reaktor ein Vorbehandlungsbehälter eingebaut sein. Mit Vorteil ist ein solcher Vorbehandlungsbehälter mit einem Rührwerk ausgestattet. Ebenso kann der Reaktor mit einer Rührvorrichtung versehen sein.

In Ausgestaltung der erfindungsgemäßen Vorrichtung mündet im unteren Teil des Reaktors eine Leitung für ein Strippgas.

In Weiterbildung der Erfindung ist neben dem Reaktor eine Fraktioniervorrichtung angeordnet, oder, bevorzugt, auf dem Reaktor eine Fraktioniervorrichtung aufgesetzt. In der Fraktioniervorrichtung können ein oder mehrere Kaminböden eingebaut sein, oberhalb derer zusätzlich zur Überkopfleitung ein oder mehrere Leitungen für weitere Produktströme (flüssig) abgehen.

Die Fraktioniervorrichtung kann mit einem Kopfkondensator mit vorgeschaltetem Wärmetauscher ausgestattet sein. Die Leitung für die vom Kopfkondensator abgezogene Gasfraktion kann zu einer Waschsäule führen. Von der Überkopfleitung der Waschsäule für Produktgas kann eine Zweigleitung zur Zuleitung für das Strippgas abgezweigt sein. Außerdem kann vom Kopf des Vorbehandlungsbehälters eine Leitung in diese Zweigleitung für das Strippgas einmünden.

In Weiterbildung der erfindungsgemäßen Vorrichtung kann eine Leitung vom Kopf des Reaktors zu einem Spaltofen, insbesondere zu einem Steamcracker, bevorzugt zu dessen Konvektionszone, führen. Eine andere Möglichkeit bietet sich dadurch, daß der Reaktor selbst in die Konvektionszone eines Spaltofens eingebaut wird.

Die folgenden Tabellen sollen das erfindungsgemäße Verfahren anhand einiger Experimente erläutern.

**Tabelle I**

| (Verfahrensbedingungen): | | | | | | |
|---|---|---|---|---|---|---|
| **Versuch** | **1** | **2** | **3** | **4** | **5** | **6** |
| Einsatz | Polyethylen | Polyethylen | Polyethylen | Kunststoff abfälle | Kunststoff abfälle | Kunststoff abfälle |
| Temperatur [°C] | 400 | 400 | 400 | 400 | 400 | 400 |
| Verweilzeit [h] | 1 | 1 | 3 | 1 | 1 | 1 |
| Druck [bar[ | 20 | 10 | 10 | 20 | 1 | 1 |
| Strippgas | H₂ | H₂ | H₂ | H₂ | Dampf | N₂ |

Unter den in Tabelle I genannten Bedingungen wurden folgende Ergebnisse erzielt:

**Tabelle II**

| (Produktverteilung [Gew.-%]): | | | | | | |
|---|---|---|---|---|---|---|
| **Versuch** | **1** | **2** | **3** | **4** | **5** | **6** |
| Gasfraktion (C₁-C₄) | 1 | 1 | 1 | 1 | 3 | 4 |
| Benzinfraktion (C₅₊ bis Siedepunkt 210°C) | 52 | 46 | 62 | 42 | 20 | 19 |
| Ölfraktion (Siedepunkt > 210°C) | 46 | 52 | 35 | 56 | 75 )¹ | 75 )¹ |
| Rückstand | 1 | 1 | 1 | 1 | 2 | 2 |

| | | | | | | |
|---|---|---|---|---|---|---|
| )¹ Die 75 Gew.-% Ölfraktion spalten sich auf in 44 Gew.-% mit einem Siedepunkt von 210-350°C und 31 Gew.-% mit einem Siedepunkt von 350 bis 550°C. | | | | | | |

Die bei den Versuchen gewonnene Benzinfraktionen wurden näher untersucht. Hierbei ergaben sich die in Tabelle III aufgeführten typische Benzinanalysen:

**Tabelle III**

| (PIONA-Analysen der Benzinfraktionen [Gew.-%]): | | | | | | |
|---|---|---|---|---|---|---|
| **Versuch** | **1** | **2** | **3** | **4** | **5** | **6** |
| n-Paraffine | 36,3 | 36,3 | 33,3 | 34,0 | 32 | 32 |
| iso-Paraffine | 6,5 | 5,8 | 4,8 | 5,5 | 9 | 9 |
| Naphthene | 12,4 | 11,3 | 11,9 | 16,3 | 17 | 17 |
| Olefine | 43,7 | 45,4 | 43,4 | 36,8 | 21 | 21 |
| Aromaten | - | 0,6 | - | 3,7 | 7 | 7 |
| Polynaphthene | - | 0,0 | - | 0,5 | 1 | 1 |
| Kohlenwasserstoffe mit Siedepunkt >200°C | 1,1 | 0,6 | 0,7 | 3,3 | 13 | 13 |

Die Zusammensetzung der aus Versuch 5 erhaltenen Gasfraktion ist in Tabelle IV angegeben. Die Gasfraktion aus Versuch 5 ist auch repräsentativ für die Gasfraktionen aus den anderen Versuchen.

**Tabelle IV**

| (Gasfraktion [Gew.-%]): | |
|---|---|
| CO | 0,003 |
| CO₂ | 0,02 |
| Methan | 0,20 |
| Ethan | 0,51 |
| Ethylen | 0,24 |
| Propan | 0,83 |
| Propylen | 1,19 |
| iso-Butan | 0,02 |
| n-Butan | 0,57 |
| 1-Buten | 0,45 |
| trans-Buten-2 | 0,09 |
| iso-Buten | 0,38 |
| cis-Buten-2 | 0,06 |
| 1,3-Butadien | 0,01 |
| C₅₊-Kohlenwasserstoffe | 2,16 |

Im folgenden wird die Erfindung anhand dreier Ausführungsbeispiele näher erläutert.

Hierbei zeigt:
- Figur 1: einen erfindungsgemäßen Reaktor mit aufgesetzter Fraktioniervorrichtung und Vorbehandlungsbehälter,
- Figur 2: einen erfindungsgemäßen Reaktor mit Direkteinspeisung in einen Steamcracker und
- Figur 3: einen erfindungsgemäßen Reaktor mit separater Fraktioniervorrichtung und Einspeisung in einen Steamcracker.

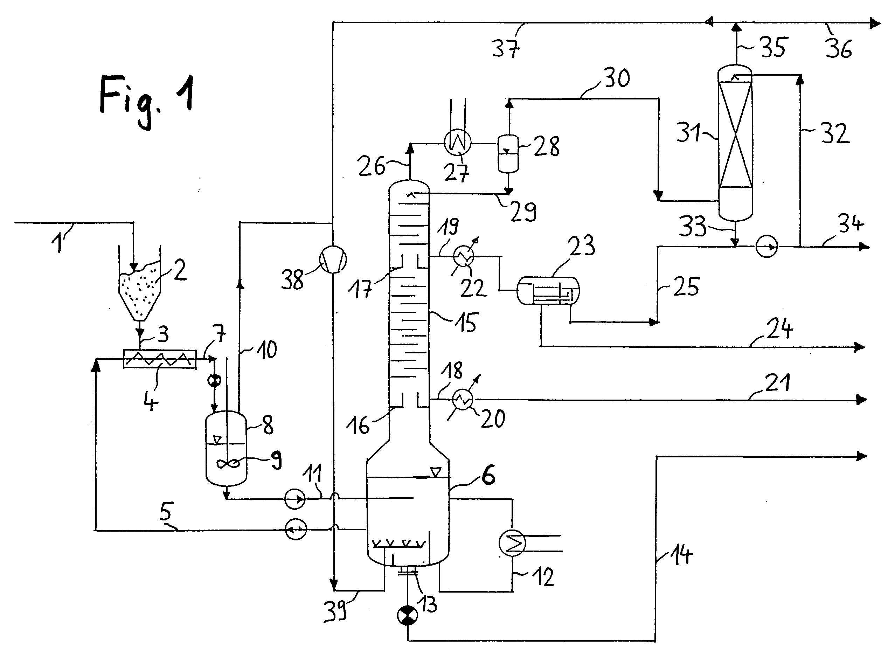

Äquivalente sind in den Figuren 1 bis 3 mit identischen Bezugsziffern versehen.

In **Figur 1** werden über Leitung 1 Kunststoffe, beispielsweise Kunststoffabfälle, zerkleinert oder als Granulat in den Speicherbehälter 2 gegeben. Vom Speicherbehälter 2 gelangen die Kunststoffe über Leitung 3 in die Mischstrecke 4, wo sie über Leitung 5 mit vom Reaktor 6 abgepumpter Sumpfphase vermischt werden. Das Polymer/Schmelzen-Gemisch wird über Leitung 7 in den Vorbehandlungsbehälter 8 gefördert. Der Vorbehandlungsbehälter 8 ist mit einem Rührer 9 ausgestattet. Im Vorbehandlungsbehälter 8 findet eine Aufschmelzung der Polymere und eine völlige Vermischung der im Vorbehandlungsbehälter 8 aufgestauten Flüssigkeit, d.h. des Reaktionsmediums für den Reaktor, statt. Vom Kopf des Vorbehandlungsbehälters 8 wird über Leitung 10 ein Gasstrom abgezogen, der die bei der Erwärmung ausgasenden Bestandteile enthält.

Über Leitung 11 wird das überwiegend flüssige Reaktionsmedium in den Reaktor 6 gegeben. Der Reaktor 6 ist mit einem Aufkocher 12 ausgestattet. Über die Ausbringung 13 wird der sich beim erfindungsgemäßen Verfahren bildende Rückstand über Leitung 14 aus dem Reaktor 6 abgeführt.

Auf dem Reaktor 6 ist eine Fraktioniervorrichtung 15 aufgesetzt. In der Fraktioniervorrichtung 15 werden die aus dem Reaktor aufsteigenden Produkte fraktioniert. In der Fraktioniervorrichtung sind die Kaminböden 16 und 17 eingebaut, so daß über die Leitungen 18 und 19 bestimmte Siedeschnitte abgezogen werden können. Die in Leitung 18 anfallende Fraktion wird gekühlt (20). Die über Leitung 19 abgetrennte Fraktion wird ebenfalls gekühlt (22) und einem Trennkessel 23 zugeführt. Vom Trennkessel wird über Leitung 24 eine Fraktion aus C₅- bis C₁₁- Kohlenwasserstoffen abgezogen. Die Flüssigprodukte in den Leitungen 21 und 24 können zur Entfernung von Begleitstoffen wie HCl und NH₃ noch in einer Extraktionsstrecke von diesen befreit werden. Vom Trennkessel 23 wird außerdem ein Abwasser über Leitung 25 abgezogen.

Das Überkopfprodukt der Fraktioniervorrichtung in Leitung 26 wird gekühlt (27) und teilweise im Kopfkondensator 28 kondensiert. Das Kondensat wird über Leitung 29 zum Kopf der Fraktioniervorrichtung zurückgeführt. Die in Leitung 30 anfallende Gasfraktion wird in eine Waschsäule 31 eingespeist. Im gezeigten Beispiel wird die Waschsäule mit Wasser als Waschmittel betrieben. Dieses wird über Leitung 32 der Waschsäule 31 aufgegeben. In der Waschsäule 31 werden aus der C₃₋ -Kohlenwasserstoffe und H₂ enthaltenden Gasfraktion Wasser und Begleitstoffe wie beispielsweise HCl und NH₃ ausgewaschen. Das mit diesen Stoffen beladene Wasser wird über Leitung 33 vom Sumpf der Waschsäule 31 abgezogen, und teilweise über Leitung 32 erneut zur Waschsäule 31 geleitet. In diesen Wasserkreislauf wird das vom Trennkessel 23 gewonnene Wasser in Leitung 25 eingemischt. Gleichzeitig wird über Leitung 34 ein Abwasser aus dem Kreislauf entfernt.

Vom Kopf der Waschsäule 31 wird die im wesentlichen C₃₋ -Kohlenwasserstoffe und H₂ enthaltende Gasfraktion über Leitung 35 abgezogen. Der überwiegende Teil der Gasfraktion wird über Leitung 36 einer weiteren Verwendung, beispielsweise als Heizgas, zugeführt. Ein Teilstrom der Gasfraktion aus Leitung 35 wird jedoch als Strippgas (37) verwendet. Der Gasstrom aus Leitung 10 vom Vorbehandlungsbehälter 8 wird mit dem Strippgas in Leitung 37 vermischt und nach Verdichtung (38) über Leitung 39 in den Reaktor 6 eingedüst.

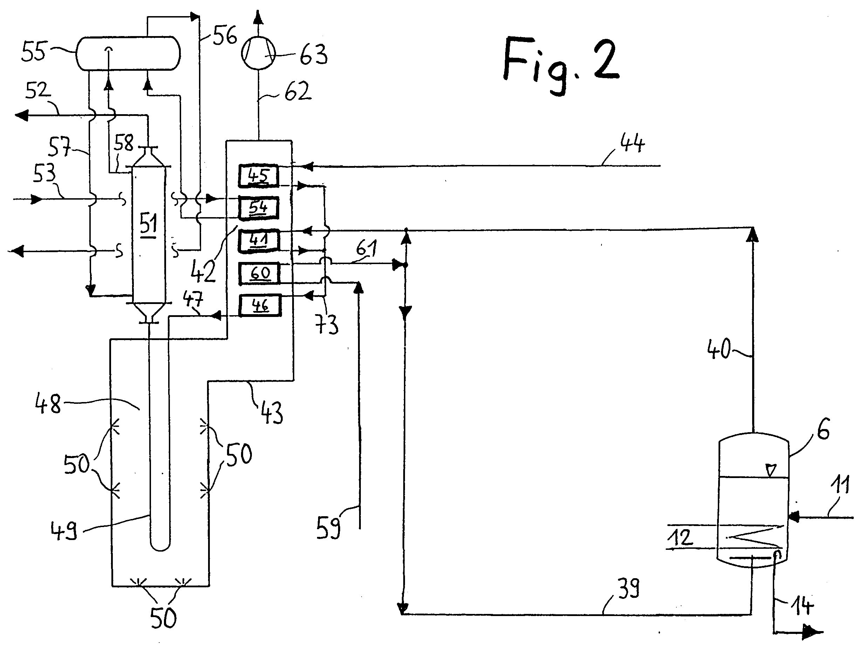

Im in **Figur 2** dargestellten Ausführungsbeispiel wird von dem Reaktor 6 das gasförmige Überkopfprodukt in Leitung 40 unfraktioniert in das Wärmebündel 41 in der Konvektionszone 42 des Steamcrackers 43 gegeben. Ein weiterer Kohlenwasserstoff-Strom, beispielsweise Naphtha, kann über Leitung 44 als Cofeed dem Wärmebündel 45 in der Konvektionszone 42 zugeführt werden. Die in den Wärmebündeln 41 und 45 vorgewärmten Ströme werden vermischt und über Leitung 73 im Überhitzerbündel 46 auf eine Temperatur knapp unterhalb der Spalttemperatur der Kohlenwasserstoffe überhitzt. Der überhitzte Strom in Leitung 47 wird in den durch die Strahlungszone 48 führenden Rohrschlangen 49 gespalten. Die Strahlungszone 48 wird dabei über die Brenner 50 zur Erzeugung der benötigten Strahlungswärme befeuert. Die Spaltprodukte aus den Rohrschlangen 49 werden nach Austritt aus der Strahlungszone in einem Quenchkühler, üblicherweise einem TLX-Wärmetauscher (Transfer Line eXchanger) abgekühlt. Die abgekühlten Spaltprodukte in Leitung 52 können einer weiteren Verarbeitung zugeführt werden.

Kesselspeisewasser aus Leitung 53 wird im Wärmetauscher 51 vorgewärmt und im in der Konvektionszone 42 des Spaltofens 43 angeordneten Wärmetauscherbündel 54 weiter erhitzt und in die Dampftrommel 55 eingespeist. Überhitzter Wasserdampf aus der Dampftrommel 55 wird über Leitung 56 im Wärmetauscher 51 weiter überhitzt. Von der Dampftrommel wird außerdem über Leitung 47 abgezogenes Wasser im Wärmetauscher 51 überhitzt und über Leitung 58 in die Dampftrommel 55 zurückgeleitet.

In der Konvektionszone 42 wird Prozeßdampf aus Leitung 59 im Wärmebündel 60 vorgewärmt und über Leitung 61 abgezogen. Der erwärmte Prozeßdampf in Leitung 61 wird teilweise als Strippgas über Leitung 39 in den Reaktor 6 eingedüst, zum anderen wird ein Teil des erwärmten Prozeßdampfes aus Leitung 61 zur Verdünnung des Überkopfprodukts vom Reaktor 6 in Leitung 40 verwendet. Die in der Strahlungszone 48 des Spaltofens 43 erzeugten Rauchgase werden zum indirekten Wärmetausch in den Wärmebündeln 46, 60, 41, 54 und 45 verwendet und anschließend über Leitung 62 und das Gebläse 63 in ein nicht dargestelltes Kamin eingespeist.

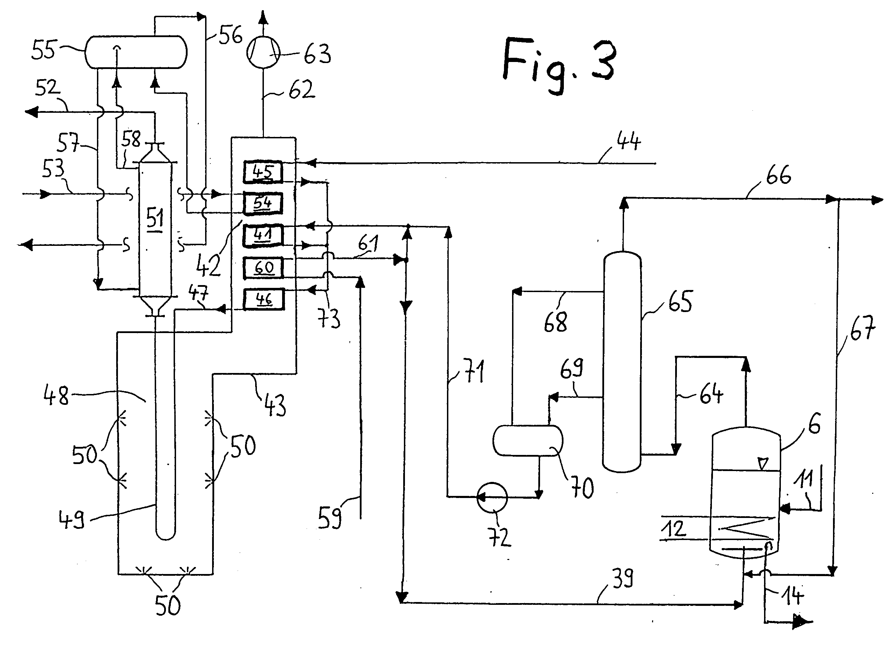

In **Figur 3** wird im Unterschied zu Figur 2 der aus der Depolymerisation gewonnene gasförmige Produktstrom vor der Depolymerisation einer Fraktionierung unterzogen, wobei die Flüssigprodukte der Fraktionierung in den Steamcracker 43 gegeben werden. Hierzu wird das Überkopfprodukt des Reaktors 6 in Leitung 64 in die Fraktioniervorrichtung 65 eingespeist. Überkopf der Fraktioniervorrichtung 65 wird - wie bereits oben im Zusammenhang mit Figur 1 erwähnt - ein niedere Kohlenwasserstoffe enthaltendes Heizgas in Leitung 66 gewonnen, das teilweise über Leitung 67 als Strippgas in den Reaktor 6 eingedüst wird. Die bei der Fraktionierung in Vorrichtung 65 erhaltenen Fraktionen, die Benzinfraktion 68 und die Ölfraktion 69 werden in einen Produktbehälter 70 gegeben und über Leitung 71 in den Steamcracker 43 gepumpt (72).

Das in den Figuren 2 und 3 durch Leitung 11 in den Reaktor 6 gegebene Einsatz-Gemisch kann aus einem Vorbehandlungsbehälter entnommen oder direkt in den Reaktor 6 eingespeist sein.

## Patentansprüche

1. Verfahren zur thermischen Depolymerisation von Kunststoffen, **dadurch gekennzeichnet,** daß die Kunststoffe in einem Reaktionsraum unter Wärmezufuhr depolymerisiert werden, wobei bei der thermischen Depolymerisation flüchtige Kohlenwasserstoffe und niedermolekulare Fragmente gewonnen werden, die aus dem Reaktionsraum gasförmig abgezogen werden, wobei im Reaktionsraum eine Umwälzung der aus den Kunststoffen erhaltenen Sumpfphase über einen Heizkreislauf mit Aufkocher erfolgt und wobei vom Sumpf des Reaktionsraumes ein flüssiger und gegebenenfalls teilweise fester Rückstand der thermischen Depolymerisation ausgeschleust wird.

2. Verfahren nach Anspruch 1, dadurch gekennzeichnet, daß die zerkleinerten, granulierten und/oder suspendierten Kunstststoffe mit einem Teilstrom der Sumpfphase aus dem Reaktionsraum vermischt in den Reaktionsraum oder den Vorbehandlungsbehälter eingespeist werden.

3. Verfahren nach einem der Ansprüche 1 oder 2, dadurch gekennzeichnet, daß die Depolymerisation bei einem Druck im Reaktionsraum von 0,01 bis 20 bara, vorzugsweise 0,1 bis 5 bara, besonders bevorzugt von 1 bis 2 bara, durchgeführt wird.

4. Verfahren nach einem der Ansprüche 1 bis 3, dadurch gekennzeichnet, daß die Depolymerisation bei einer Temperatur von 300 bis 900°C, vorzugsweise von 350 bis 600°C, besonders bevorzugt von 400 bis 550°C, durchgeführt wird.

5. Verfahren nach einem der Ansprüche 1 bis 4, dadurch gekennzeichnet, daß die Polymere bei einer Verweilzeit von 0,1 bis 3 h, vorzugsweise von 0,5 bis 2 h, im Reaktionsraum depolymerisiert werden.

6. Verfahren nach einem der Ansprüche 1 bis 5, dadurch gekennzeichnet, daß die Kunststoffe zerkleinert oder als Granulat und/oder in Suspension erwärmt und aufgeschmolzen werden.

7. Verfahren nach einem der Ansprüche 1 bis 6, dadurch gekennzeichnet, daß die Erwärmung und Aufschmelzung der in den Kunststoffen enthaltenen Polymere zumindest teilweise in einem Vorbehandlungsbehälter durchgeführt wird.

8. Verfahren nach einem der Ansprüche 1 bis 7, dadurch gekennzeichnet, daß in den Reaktionsraum oder den Vorbehandlungsbehälter ein Hilfsmedium eingespeist wird.

9. Verfahren nach einem der Ansprüche 1 bis 8, dadurch gekennzeichnet, daß in den Reaktionsraum ein Strippgas eingespeist wird.

10. Verfahren nach Anspruch 9, dadurch gekennzeichnet, daß als Strippgas Wasserdampf, ein Inertgas (z.B. N₂, He und Ar), H₂ oder deren Mischungen eingesetzt wird.

11. Verfahren nach einem der Ansprüche 1 bis 10, dadurch gekennzeichnet, daß die aus dem Reaktionsraum aufsteigenden gasförmigen Produkte einer Fraktionierung, vorzugsweise in einer auf dem Reaktionsraum aufgesetzten Fraktioniervorrichtung, unterzogen werden.

12. Verfahren nach Anspruch 11, dadurch gekennzeichnet, daß vom Kopf der Fraktionierung eine Gasfraktion aus im wesentlichen C₃₋ -Kohlenwasserstoffen abgezogen wird.

13. Verfahren nach Anspruch 12, dadurch gekennzeichnet, daß die Gasfraktion einer Gaswäsche, vorzugsweise einer Wasserwäsche, zur Entfernung von H₂O und Begleitstoffen wie HCl und/oder NH₃ zugeführt wird.

14. Verfahren nach einem der Ansprüche 12 oder 13, dadurch gekennzeichnet, daß ein Teilstrom der Gasfraktion oder des von der Gaswäsche abgezogenen Produktstromes als Strippgas, gegebenfalls mit anderen Strippgasen vermischt, in den Reaktionsraum eingespeist wird.

15. Verfahren nach einem der Ansprüche 11 bis 14, dadurch gekennzeichnet, daß bei der Fraktionierung eine Benzinfraktion, vorzugsweise aus C₄- bis C₁₁ -Kohlenwasserstoffen, und eine Ölfraktion, vorzugsweise aus C₁₂₊ -Kohlenwasserstoffen mit einem Siedepunkt unterhalb 500°C, gewonnen wird.

16. Verfahren nach einem der Ansprüche 1 bis 10, dadurch gekennzeichnet daß das am Kopf des Reaktionsraumes gewonnene Produkt ohne Fraktionierung in einen Spaltofen mit Konvektions- und Strahlungszone eingespeist wird.

17. Verfahren nach einem der Ansprüche 1 bis 15, dadurch gekennzeichnet, daß die bei der Fraktionierung gewonnenen Benzin- und/oder Ölfraktionen einem Spaltofen zugeführt werden.

18. Verfahren nach einem der Ansprüche 1 bis 16, dadurch gekennzeichnet, daß der aus dem Reaktionsraum abgezogene Produktstrom oder die aus der Fraktionierung gewonnenen Produktströme einer Hydrierung unterzogen werden.

19. Vorrichtung zur thermischen Depolymerisation von Kunststoffen, **dadurch gekennzeichnet,** daß die Vorrichtung einen Reaktor (6) mit einer Zuleitung (11) für den Polymereinsatz, eine Leitung (26, 40, 64) vom Kopf des Reaktors (6) für das gasförmige Produkt und eine Leitung (14) für flüssige und/oder feste Rückstände enthält und daß der Reaktor (6) mit einem Aufkocher (12) zur Umwälzung der Sumpfphase ausgestattet ist.

20. Vorrichtung nach Anspruch 19, dadurch gekennzeichnet, daß der Reaktor (6) mit einer Rührvorrichtung versehen ist.

21. Vorrichtung nach einem der Ansprüche 19 oder 20, dadurch gekennzeichnet, daß eine Leitung (5) vom Reaktor (6) zu einer Mischvorrichtung (4) für das zerkleinerte, granulierte oder suspendierte Polymergemisch und eine Leitung (7, 11) von der Mischvorrichtung (4) zum Reaktor (6) führt.

22. Vorrichtung nach Anspruch 21, dadurch gekennzeichnet, daß in die Leitung (7, 11) von der Mischvorrichtung (4) zum Reaktor (6) ein Vorbehandlungsbehälter (8) eingebaut ist.

23. Vorrichtung nach Anspruch 22, dadurch gekennzeichnet, daß der Vorbehandlungsbehälter (8) mit einem Rührer (9) ausgestattet ist.

24. Vorrichtung nach einem der Ansprüche 19 bis 23, dadurch gekennzeichnet, daß in den unteren Teil des Reaktors (6) eine Leitung (39) für ein Strippgas mündet.

25. Vorrichtung nach einem der Ansprüche 19 bis 24, dadurch gekennzeichnet, daß neben dem Reaktor (6) eine Fraktioniervorrichtung (65) angeordnet ist oder, bevorzugt, daß auf dem Reaktor (6) eine Fraktioniervorrichtung (15) aufgesetzt ist.

26. Vorrichtung nach Anspruch 25, dadurch gekennzeichnet, daß in der Fraktioniervorrichtung (15, 65) ein oder mehrere Kaminböden (16, 17) eingebaut sind, oberhalb derer zusätzlich zur Überkopfleitung (26, 66) ein oder mehrere Leitungen für Produktströme (18, 19, 68, 69) von der Fraktioniervorrichtung (15, 65) abgehen.

27. Vorrichtung nach Anspruch 26, dadurch gekennzeichnet, daß die Fraktioniervorrichtung (15, 65) mit einem Kopfkondensator (28) mit vorgeschaltetem Wärmetauscher (27) ausgestattet ist.

28. Vorrichtung nach Anspruch 27, dadurch gekennzeichnet, daß eine Leitung (30) für die vom Kopfkondensator (28) abgezogene Gasfraktion zu einer Waschsäule (31) führt.

29. Vorrichtung nach Anspruch 26, dadurch gekennzeichnet, daß vom am Kopf der Waschsäule (31) gewonnenen Produkt in Leitung (35) eine Zweigleitung (37) zur Zuleitung (39) für ein Strippgas führt.

30. Vorrichtung nach Anspruch 29, dadurch gekennzeichnet, daß vom Kopf des Vorbehandlungsbehälters (8) eine Leitung (10) zur Zweigleitung (37) für das Strippgas führt.

31. Vorrichtung nach einem der Ansprüche 19 bis 24, dadurch gekennzeichnet, daß die Leitung (40) vom Kopf des Reaktors (6) zu einem Spaltofen, vorzugsweise in dessen Konvektionszone (42), führt.

32. Vorrichtung nach einem der Ansprüche 19 bis 26, dadurch gekennzeichnet, daß die Fraktioniervorrichtung (65) über Leitungen (68, 69, 71) mit einem Spaltofen (43), vorzugsweise mit dessen Konvektionszone (42), verbunden ist.

33. Vorrichtung nach einem der Ansprüche 19 bis 24, dadurch gekennzeichnet, daß der Reaktor (6) selbst in der Konvektionszone (42) des Spaltofens (43) eingebaut ist.
